(19) Europäisches Patentamt
European Patent Office
Office européen des brevets

(11) **EP 1 040 143 B1**

(12) **EUROPÄISCHE PATENTSCHRIFT**

(45) Veröffentlichungstag und Bekanntmachung des Hinweises auf die Patenterteilung:
**08.05.2002 Patentblatt 2002/19**

(21) Anmeldenummer: **98965252.4**

(22) Anmeldetag: **11.12.1998**

(51) Int Cl.$^7$: **C08F 110/10**, C08F 2/00, C08F 2/14, C08F 4/14

(86) Internationale Anmeldenummer:
**PCT/EP98/08099**

(87) Internationale Veröffentlichungsnummer:
**WO 99/31151 (24.06.1999 Gazette 1999/25)**

(54) **VERFAHREN ZUR HERSTELLUNG VON NIEDERMOLEKULAREM, HOCHREAKTIVEM POLYISOBUTYLEN**

METHOD FOR PRODUCING LOW-MOLECULAR, HIGHLY REACTIVE POLYISOBUTYLENE

PROCEDE DE PREPARATION DE POLYISOBUTYLENE A FAIBLE POIDS MOLECULAIRE TRES REACTIF

(84) Benannte Vertragsstaaten:
**BE DE ES FI FR GB IT NL SE**

(30) Priorität: **12.12.1997 DE 19755322**

(43) Veröffentlichungstag der Anmeldung:
**04.10.2000 Patentblatt 2000/40**

(73) Patentinhaber: **BASF AKTIENGESELLSCHAFT
67056 Ludwigshafen (DE)**

(72) Erfinder:
- **RATH, Hans, Peter
D-67269 Grünstadt (DE)**
- **KANNE, Ulrich
D-67134 Birkenheide (DE)**
- **VAN DEYCK, Frans
B-2190 Essen (BE)**

(56) Entgegenhaltungen:
**EP-A- 0 628 575** **WO-A-96/40808**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von niedermolekularem, hochreaktivem Polyisobutylen in flüssiger Phase mit einem Bortrifluorid-Komplex-Katalysators, bei der man die Polymerisation so führt, daß am Ende der Polymerisation der Restgehalt an Isobuten weniger als 2 Gew.-% beträgt, der Komplex-Katalysator abgetrennt und in die Polymerisation zurückgeführt wird.

Niedermolekulare und hochmolekulare Polyisobutene mit Molekulargewichten bis zu mehreren 100000 Dalton sind seit langem bekannt und ihre Herstellung wird beispielsweise in H. Güterbock: Polyisobutylen und Mischpolymerisate, S. 77 bis 104, Springer, Berlin 1959, beschrieben. Die zur Zeit erhältlichen Polyisobutene dieses Molekulargewichtsbereiches werden überwiegend mit Hilfe von Lewis-Säure-Katalysatoren, wie Aluminiumchlorid, Aluminiumalkylchloriden oder Bortrifluorid, hergestellt und haben meist eine Molekulargewichtsverteilung (Dispersizität) zwischen 2 und 7.

Von diesen herkömmlichen Polyisobutenen mit mittleren Molmassen von 500 bis 5000 Dalton sind die sogenannten hochreaktiven Polyisobutene zu unterscheiden, welche in der Regel einen hohen Gehalt an Vinylidengruppierungen von vorzugsweise deutlich über 60 Mol-% und eine Dispersität $\bar{M}_W/\bar{M}_N$ unter 2 haben. Solche hochreaktiven Polyisobutene werden als Zwischenprodukt zur Herstellung von Additiven für Schmier- und Kraftstoffe verwendet, wie sie beispielsweise in DE-A 27 02 604 beschrieben sind. Zur Herstellung dieser Additive werden zunächst durch Reaktion der endständigen Doppelbindungen des Polyisobutens mit Maleinsäureanhydrid alternierende Copolymere, insbesondere Polyisobutenylbernsteinsäureanhydride, erzeugt, welche anschließend mit bestimmten (Poly)Aminen und/oder Alkoholen zum fertigen Additiv umgesetzt werden. Da bei der en-Reaktion mit Maleinsäureanhydrid die Vinylidendoppelbindungen bevorzugt reagieren, wohingegen die weiter im Innern der Makromoleküle liegenden Doppelbindungen je nach ihrer Lage im Makromolekül ohne die Zugabe von Halogenen zu keinem oder zu einem deutlich geringeren Umsatz führen, ist der Anteil an endständigen Doppelbindungen im Molekül das wichtigste Qualitätskriterium für diesen Polyisobutentypus.

Über das Zustandekommen der Vinylidendoppelbindungen und die Isomerisierung der endständigen Doppelbindungen in den Isobutenmakromolekülen zu internen Doppelbindungen bestehen nach Puskas et al., J. Polymer Sci.: Symposium No. 56, 191 (1976) die im folgenden Formelschema wiedergegebenen Vorstellungen:

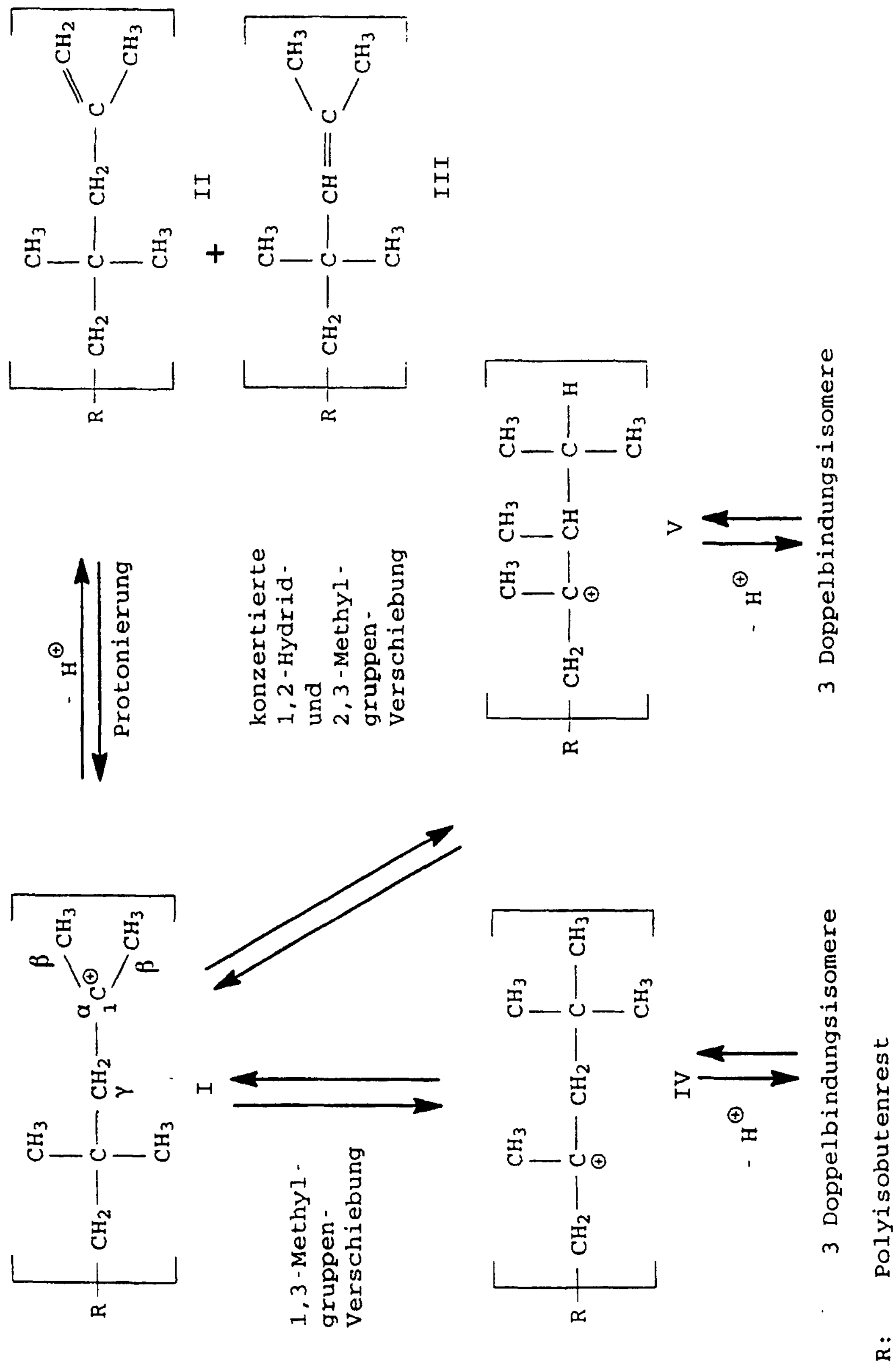


Das im Laufe der Polymerisationsreaktion entstehende Polyisobutenkation I kann durch die Abspaltung eines Protons in das betreffende Polyisobuten übergehen. Dabei kann das Proton sowohl aus einer der β-Methylgruppen oder aus der internen γ-Methylengruppe abgespalten werden. Je nachdem aus welcher dieser beiden Positionen das

Proton abgespalten wird, entsteht dabei ein Polyisobuten mit einer Vinylidendoppelbindung II oder mit einer trisubstituierten, nahe dem Ende des Moleküls befindlichen Doppelbindung III.

Das Polyisobutenkation I ist relativ instabil und versucht sich durch Umlagerung in höhersubstituierte Kationen zu stabilisieren, wenn die Acidität des Katalysatorsystems hoch genug ist. Dabei können sowohl 1,3-Methylgruppenverschiebungen zum Polyisobutenkation IV als auch sukzessive oder konzertierte 1,2-Hydrid- und 2,3-Methylgruppenverschiebungen zum Polyisobutenkation V stattfinden. Aus den Kationen IV und V können sich, je nachdem aus welcher Position das Proton abgespalten wird, jeweils drei verschiedene Doppelbindungsisomere Polyisobutene bilden. Es besteht aber auch die Möglichkeit, daß sich die Kationen IV und V weiter umlagern, mit der Wirkung, daß die Doppelbindung noch weiter ins Innere des Polyisobutenmakromoleküls wandert.

Alle diese Deprotonierungen und Umlagerungen sind Gleichgewichtsreaktionen und somit reversibel, wobei allerdings, letztendlich die Bildung stabilerer, höhersubstituierter Kationen und somit die Bildung von Polyisobutenen mit innenständiger Doppelbindung unter Einstellung des thermodynamischen Gleichgewichtes bevorzugt ist. Diese Deprotonierungen, Protonierungen und Umlagerungen werden durch gegebenenfalls im Reaktionsgemisch enthaltende Säurespuren, insbesondere jedoch vom zur Katalyse der Polymerisation benötigten Lewis-Säure-Katalysator selbst katalysiert. Aufgrund dieser Sachlage und da lediglich Polyisobutene mit Vinylidendoppelbindungen gemäß Formel II sehr gut unter Adduktbildung mit Maleinsäureanhydrid reagieren, Polyisobutene der Formel III im Vergleich dazu bereits eine deutlich verminderte Reaktivität haben und andere Polyisobutene mit höhersubstituierten Doppelbindungen die en-Reaktion mit Maleinsäureanhydrid praktisch nur unter isomerisierenden Bedingungen eingehen, wird das fortwährende Bemühen vieler Forschungsgruppen, verbesserte Verfahren zur Herstellung hochreaktiver Polyisobutene mit immer höheren Gehalten an endständigen Doppelbindungen zu finden, verständlich.

Die Herstellung von niedermolekularem, hochreaktivem Polyisobuten aus Isobuten oder Isobuten-haltigen Kohlenwasserstoffströmen, insbesondere aus von darin ursprünglich enthaltenem 1,3-Butadien weitgehend befreicen $C_4$-Schnitten der Steamcracker, FCC-Cracker (FCC:Fluid Catalyzed Cracking), sogenannten $C_4$-Raffinaten, ist aus einer Reihe von Schutzrechten bekannt, beispielsweise aus EP-A 145 235, EP-A 481 297, DE-A 27 02 604, EP-A 628 575, EP-A 322 241 und WO 93/10063. Alle diese Verfahren betreffen die Polymerisation von Isobuten in einer einzigen Polymerisationsstufe.

Eine weitere Verbesserung stellt das zweistufige oder mehrstufige Verfahren der WO 96/40808 dar, gemäß dem man die Polymerisation in mindestens zwei Polymerisationsstufen durchführt, wobei in der ersten Polymerisationsstufe das zugeführte Isobuten bei weitgehend gleichbleibender Isobutenkonzentration bis zu einem Teilumsatz von bis zu 95 % polymerisiert und die Polymerisation des restlichen Isobutens ohne oder nach vorheriger Abtrennung des in der ersten Polymerisationsstufe gebildeten Polyisobutens in einer oder mehreren nachfolgenden Polymerisationsstufen weiterführt.

Zusätzlich zu dem Bestreben der Verfahrensoptimierung gemäß den zitierten Publikationen bestand weiterhin das Ziel der Wiedergewinnung von $BF_3$ aus ökonomischen und ökologischen Gründen. Demgemäß wird in EP-A 0 742 191 vorgeschlagen, den $BF_3$-Komplex im Produktstrom thermisch zu spalten und das freiwerdende $BF_3$ zwecks Wiederverwendung in einem einen Promotor enthaltenden Olefinstrom zu absorbieren.

Dieses Verfahren hat den Nachteil der thermischen Belastung des Wertproduktes in Gegenwart des Katalysators, verbunden mit Isomerisierung der Vinyliden-Doppelbindung zum höher substituierten Doppelbindungstyp und der Abwasserbelastung durch den Komplexbildner. Zur Herstellung reaktiver Polyisobutene ist der vorgeschlagene Weg nicht praktikabel.

Es bestand daher die Aufgabe ein Verfahren zu finden, das die Herstellung von hochreaktivem Polyisobutylen und die Katalysatorrückführung erlaubt.

Diese Aufgabe wurde gelöst mit einem Verfahren zur Herstellung von niedermolekularem, hochreaktivem Polyisobutylen eines mittleren Molekulargewichts $M_n$ von 500 bis 5000 Dalton und einem Gehalt von endständigen Doppelbindungen von über 80 mol-% durch Polymerisation von Isobuten oder isobutenhaltigen Kohlenwasserstoffströmen in der flüssigen Phase und mit Hilfe eines Bortrifluorid-Komplex-Katalysators bei Temperaturen von -40 bis +20°C und bei einem Druck von 1 bis 20 bar, dadurch gekennzeichnet, daß man

a) die Polymerisation bis zu einem Restgehalt des Reaktionsgemisches von weniger als 2 Gew.-% Isobuten, bezogen auf die Gesamtmenge eingespeister Ströme, durchführt oder gegen Ende der Polymerisation restliches Isobuten soweit entfernt, daß der Restgehalt weniger als 2 Gew.-% beträgt,

b) den dabei in Form von Tröpfchen anfallenden Bortrifluorid-Komplex-Katalysator in disperser und/oder kohärenter Phase anreichert,

c) die an Komplex reichen Phasen in die Polymerisation zurückführt und

d) die Katalysatorverluste durch Zusatz von Bortrifluorid und gegebenenfalls von Komplexbildnern ausgleicht.

Die Polymerisation kann in An- oder Abwesenheit von Lösungsmitteln erfolgen. Als Lösungsmittel werden im allgemeinen Kohlenwasserstoffe z.B. Butan, Pentan, Heptan, Octan eingesetzt, wobei diese Kohlenwasserstoffe sowohl als reine Stoffe als auch in Form technischer Gemische eingesetzt werden können.

Zur möglichst quantitativen Abscheidung des Komplexes verwendet man bevorzugt begrenzt lösliche Komplexe und/oder kühlt das Reaktionsgemisch auf Temperaturen von z.B. 5 bis 30°C unter Reaktortemperatur, vorzugsweise um 10 bis 20°C ab.

Unter begrenzt löslichen Komplexen werden dabei Komplexe mit einer Löslichkeit von z.B. in Hexan/Polyisobuten 1:1 bei -15°C von 0,1 bis 10 g/l, vorzugsweise 0,3 bis 3 g/l verstanden.

Begrenzt lösliche Komplexe lassen sich durch die Wahl des Komplexbildners erzeugen. So ist ein Methyl-tert.-Butylether-Komplex schlechter löslich als der Isopropyl-tert.-Butylether, ein Methanolkomplex weniger löslich als ein Isopropanolkomplex. Man kann auch durch Mischen der Komplexbildner eine geeignete Löslichkeit einstellen. Außerdem wird durch nicht vollständige Trocknung des dem Reaktor zugeführten Isobutens, insbesondere des frisch zugeführten Isobutens - das rückgeführte Isobuten wird im allgemeinen getrocknet - und/oder durch Nebenreaktionen, wie der Dehydratisierung des als Cokatalysators verwendeten Alkohols oder durch Spaltung gegebenenfalls als Cokatalysator verwendeter Alkylether, freigesetztes Wasser ein $BF_3$-Wasser-Komplex gebildet, der sich durch die Rückführung anreichert. Diese Wassermengen bestimmen dann auch meist den Grad der Abscheidung. Aber auch Methanol, Flußsäure, Ameisensäure, Formaldehyd und Acetaldehyd mindern die Löslichkeit des $BF_3$-Komplexes. Bevorzugt verwendet man Bortrifluorid-Komplexe oder Komplexgemische mit Wasser, Methanol, Ethanol, n- oder iso-Propanol, 2-Butanol oder tert.-Butanol oder deren tert.-Butylether, besonders bevorzugt sind Bortrifluorid-Komplexe mit Methanol, Ethanol, n- oder iso-Propanol, 2-Butanol oder deren tert.-Butylether.

In allen Fällen aber schreitet bei der Abtrennung des $BF_3$-Komplexes von der Polymerisationsmischung die Polymerisation fort und je nach Polymer- und Isobutenkonzentration kann sich das entstandene Polyisobuten nachteilig hinsichtlich Molekulargewicht, Molekulargewichtsverteilung und Reaktivität verändern. Die Abtrennung wird daher bei niedrigen Isobutenkonzentrationen, d.h. weniger als 2 Gew.-%, vorzugsweise weniger als 1 Gew.-%, bezogen auf die Gesamtmenge der eingespeisten Ströme, durchgeführt, wodurch die Veränderung der Eigenschaften des hergestellten Polymeren vernachlässigbar gering wird.

Daher ist die mehrstufige Arbeitsweise des Polyisobutenverfahrens gemäß WO 96/40808, bei der Restisobuten des Hauptreaktors auf ca. 0,5 % im Nachreaktor abreagiert, eine bevorzugte Fahrweise für die Stufe (a) der Erfindung. Mit homogener Katalyse im Hauptreaktor kommt es ferner durch die gekühlte Nachreaktion zu einer stärkeren Komplexabscheidung. Die Löslichkeit des Komplexes fällt fast eine Zehnerpotenz, insbesondere wenn dabei noch eine Temperaturabsenkung vorgenommen wird.

Die feinstverteilten Komplextröpfchen der entstehenden Emulsion sind teilweise recht schwierig abzuscheiden, so daß eine niedrige Viskosität der Emulsion angestrebt werden sollte. Zur technischen Lösung sind Koaleszierfilter, Separatoren und/oder großvolumige Abscheider zweckmäßig. Auf diese Weise können 40 bis 95 % des Katalysators problemlos abgeschieden und in den Reaktor zurückgefahren werden.

Ist die Abscheidungsrate des Komplexes besonders hoch und die Trocknung der Reaktorzuläufe nicht vollständig, kann eine partielle Ausschleusung z.B. 10 bis 30 % des abgeschiedenen Komplexes notwendig werden. Soll dies vermieden werden, ist eine Trocknung der Reaktorzuläufe über ein Molekularsieb 3 Å bei zweckmäßigerweise 3 bis 5°C angezeigt.

Eine andere Möglichkeit der Einstellung der erfindungsgemäßen Isobutenkonzentrationen besteht in einem Flash des Reaktoraustrags, also einer Entspannungsverdampfung. Dabei wird die Polymerisätionsmischung bei Temperaturen unter 0°C, im allgemeinen bei Reaktortemperatur in ein Entspannungsgefäß entspannt, dessen Druck niedriger liegt als der Druck im Polymerisationsreaktor, der im allgemeinen 1 bis 20 bar abs., vorzugsweise 1 bis 10 bar und besonders bevorzugt 1 bis 6 bar beträgt. Im allgemeinen wird der Druck im Entspannungsgefäß so eingestellt, daß er bei 1-100 mbar, vorzugsweise 5-50 mbar und besonders bevorzugt 10-30 mbar abs. liegt. Die Einstellung des Drucks im Entspannungsgefäß erfolgt so, daß die gewünschte Restisobutenkonzentration erreicht wird. Die Brüden haben üblicherweise eine Säurezahl (SZ) gemäß DIN 53402 in mg KOH/g Substanz bis zu 1,0 und werden in der Regel bei tiefen Temperaturen kondensiert, bevorzugt bei Reaktortemperatur, und zum Reaktor zurückgeführt. Im Sumpf der Flash-Verdampfung fällt nun aufgrund der niedrigeren Temperatur und des niedrigeren Isobutengehaltes ein wasserhaltiger Komplex aus, der im Phasenscheider und/oder Koaleszer abgetrennt und zum Reaktor zurückgeführt wird.

Eine spezielle Ausführungsform des vorliegenden Verfahrens stellt die Emulsionspolymerisation dar. Bei der Emulsionspolymerisation ist der Komplex bereits zu Beginn der Polymerisation im Reaktionsgemisch nicht mehr vollständig löslich. Ungelöste Komplextröpfchen erhöhen im allgemeinen die Oligomerbildung (Destillatausbeute), wenn nicht eine sehr gute Dispergierung der nicht gelösten Komplextröpfchen erfolgt. Eine solche Dispergierung der nicht gelösten Katalysatortröpfchen wird z.B. durch eine Wälzpumpe in einem Umlaufreaktor mit hohen Fördermengen wie in US 5,286,823 beschrieben, erreicht. Auch Zahnkranzmischer oder andere Aggregate mit hohem Energieeintrag sind geeignet.

Nach erfolgter Reaktion werden dann die Tröpfchen in Abscheidern abgetrennt, gegebenenfalls nach Einsatz von Koaleszierhilfsmitteln. Es gelingt dabei in vielen Fällen eine Komplexabscheidung und Rückführung von bis zu 95 %.

Die homogene Polymerisation ist jedoch bevorzugt. Im einzelnen wird die homogene Polymerisation in flüssiger Phase mit Hilfe eines Bortrifluorid-Komplexkatalysators bei -40 bis 20°C, vorzugsweise bei -30 bis 10°C und insbesondere bei -20 bis 0°C und bei einem Druck von im allgemeinen 1 bis 20 bar, vorzugsweise von 1 bis 10 bar, insbesondere bei 1 bis 6 bar in an sich bekannter Weise, z.B. nach den Angaben von US 5,408,018 und 5,286,823, auf deren Angaben hiermit Bezug genommen wird, durchgeführt.

Die bevorzugte Arbeitsweise für die Stufe (a) des erfindungsgemäßen Verfahrens ist, wie bereits erwähnt, die mehrstufige Methode der WO 96/40808.

Die Polymerisation gemäß dieser Methode wird in ihrer einfachsten Ausgestaltung mit zwei Polymerisationsstufen betrieben. Zur Erzielung hoher Gehalte an endständigen Doppelbindungen des Polyisobutens und eines niedrigen Fluorgehalts der gewaschenen Polymerlösung kann dabei auf verschiedenerlei Weise vorgegangen werden.

Beispielsweise ist es möglich, in der ersten Polymerisationsstufe einen Isobutenumsatz von 5 bis 98 %, vorzugsweise von 50 bis 95 %, insbesondere von 50 bis 90 %, einzustellen und in der zweiten Stufe die Polymerisation dann zu Ende zu führen.

Die zweite Polymerisationsstufe wird dabei vorteilhaft bei gleicher oder einer niedrigeren Polymerisationstemperatur betrieben als die erste Polymerisationsstufe, in der Regel beträgt die Temperaturdifferenz dabei 0 bis 20°C, vorzugsweise 0 bis 10°C.

Da die Polymerisation des Isobutens exotherm verläuft, wird die Polymerisationstemperatur in der ersten Polymerisationsstufe bei vorgegebener Kühlmitteltemperatur - vorteilhaft wird als Kühlmittel flüssiges Ammoniak verwendet, die Verwendung anderer Kühlmittel, wie flüssiges Schwefeldioxid oder wäßrige Salzlösungen oder Alkohol-Wasser-Gemische, ist ebenfalls möglich - durch die Reaktivität des eingesetzten Katalysator-Komplexes, d.h. die Zufuhr von Komplexbildner so gesteuert, daß sie, von technisch unvermeidbaren Schwankungen oder Konzentrationssprüngen an den Einspeisestellen abgesehen, im wesentlichen konstant bleibt. Der Isobutenumsatz in der ersten Polymerisationsstufe wird dabei unter Berücksichtigung obengenannter Parameter, nämlich Kühlmitteltemperatur, Polymerisationstemperatur und einer mittleren Verweilzeit des Reaktionsgemisches im Reaktor, durch die Einstellung der Reaktivität des Katalysatorkomplexes über die Dosierung des Komplexbildners gesteuert.

Der Austrag aus der ersten Polymerisationsstufe wird vorzugsweise unmittelbar in die zweite Polymerisationsstufe geleitet. Hier wird die Polymerisation ohne Zusatz frischen Isobutens vorzugsweise bei einer tieferen Polymerisationstemperatur als in der ersten Polymerisationsstufe fortgesetzt. Dies kann durch eine tiefere Temperatur des Kühlmittels bewirkt werden, oder bei Verwendung eines Kühlmittels gleicher Temperatur wie in der ersten Polymerisationsstufe, beispielsweise bei Mitbenutzung der dort verwendeten Kühlvorrichtung, indem man die Kühlung so steuert, daß mehr Wärme aus dem Polymerisationsgemisch abgeführt als dort bei der Polymerisation des restlichen Isobutens freigesetzt wird. Unter Umständen kann es erforderlich oder zweckmäßig sein, dem durch tiefere Temperaturen inaktiveren Komplex durch Zufuhr von Bortrifluorid zu ergänzen oder zu aktivieren, damit die Polymerisation nicht vorzeitig zum Stillstand kommt. Dieser Zusatz von Bortrifluorid kann vor oder nach der Einleitung des Polymerisationsgemisches in die zweite Polymerisationsstufe erfolgen. Eine spätere Aktivierung verbessert die Abscheidung des Komplexes ohne Einbußen an Produktqualität.

Die Verweilzeit des Polymerisationsgemisches in der ersten Polymerisationsstufe beträgt bei der Einstellung eines Isobutenumsatzes von 50 bis 90 % üblicherweise 5 bis 60 Minuten, kann aber auch kürzer oder länger sein, je nachdem, ob ein sehr aktiver oder weniger aktiver Katalysator verwendet wird. In der zweiten Polymerisationsstufe wird im allgemeinen eine Verweilzeit von 1 bis 180, vorzugsweise von 2 bis 120 Minuten eingestellt. Im allgemeinen wird in der zweiten Polymerisationsstufe der Isobutenumsatz so eingestellt, daß der Gesamtumsatz des Isobutens in der ersten und zweiten Polymerisationsstufe im allgemeinen bei 80 bis 100 %, vorzugsweise bei 90 bis 100 %, insbesondere bei 95 bis 100 %, liegt.

Falls das Polymerisationsgemisch in der zweiten Stufe noch mehr als 2 Gew.-% Isobuten, bezogen auf das in die erste Stufe eingespeiste Isobuten, enthält, kann alternativ das nicht umgesetzte Isobuten gemeinsam mit dem Polymerisationsaustrag aus der zweiten Polymerisationsstufe ohne weitere Aufarbeitung einer dritten Polymerisationsstufe zugeführt werden und dort, bei einer tieferen Polymerisationstemperatur als in der zweiten Polymerisationsstufe bis zu einem Isobuten-Gehalt von unter 2 Gew.-% weiterpolymerisiert werden. Im allgemeinen wird die Polymerisationstemperatur in einer solchen dritten Polymerisationsstufe um 0 bis 20°C, vorzugsweise 0 bis 10°C, tiefer eingestellt als die Polymerisationstemperatur in der vorausgehenden zweiten Polymerisationsstufe. Die Einstellung der Polymerisationstemperatur kann unter Anwendung der Maßnahmen erfolgen, wie sie zuvor für die Einstellung der Polymerisationstemperatur in der zweiten Polymerisationsstufe erläutert wurden. Die Verweilzeit der Polymerisationsmischung in der dritten Polymerisationsstufe wird in Abhängigkeit von der Katalysatoraktivität und dem gewünschten Umsatz eingestellt, im allgemeinen beträgt sie 2 bis 180, vorzugsweise 10 bis 120 Minuten. wie bei der Erläuterung der Durchführung der zweiten Polymerisationsstufe geschildert, kann es gegebenenfalls erforderlich oder zweckmäßig

sein, die Katalysatoraktivität durch Zusatz von Bortrifluorid zu erhöhen. Der Druck in der zweiten und gegebenenfalls dritten Polymerisationsstufe beträgt im allgemeinen 1 bis 20 bar, vorzugsweise 1 bis 10 bar, insbesondere 1 bis 6 bar.

Obgleich die Anwendung einer zweiten und dritten Polymerisationsstufe auch beim Einsatz von Reinisobuten in die Polymerisation von Vorteil ist, erweist sie sich als besonders vorteilhaft, wenn Isobuten-haltige $C_4$-Kohlenwasserstoffströme, wie $C_4$-Raffinate oder $C_4$-Schnitte aus der Isobuten-Dehydrierung als Einsatzstoff im erfindungsgemäßen Verfahren verwendet werden, da durch sie Isobutenverluste vermieden werden, keine Aufpegelung unerwünschter Kohlenwasserstoffe infolge Rückführung nicht umgesetzten, andere Kohlenwasserstoffe enthaltenden Isobutens in die erste Polymerisationsstufe eintritt und hierdurch ein qualitativ hochwertigeres, praktisch Fluor-freies, Isobutenarmes Raffinat II neben Polyisobuten (PIB) mit einem hohen Gehalt an endständigen Doppelbindungen erhalten wird. Die Aufarbeitung des Polymerisationsaustrags aus der dritten Polymerisationsstufe kann auf die gleiche Weise erfolgen, wie sie bei der Aufarbeitung des Austrags aus der zweiten Polymerisationsstufe geschildert wurde.

Für die Ausführung der mehrstufigen Polymerisation im einzelnen wird auf WO 96/40808 verwiesen. Auf diese Schrift wird deshalb ausdrücklich Bezug genommen und deren Angaben sollen als hier inkorporiert gelten.

Die Stufe (b) beinhaltet die Anreicherung des in Tröpfchenform ausgefallenen Katalysator-Komplexes, der zunächst als disperse Phase entsteht. Im allgemeinen bilden diese dispersen Tröpfchen z.T. recht schnell auch eine kohärente Phase, die neben Lösemittel, Isobuten und niederen Oligomeren manchmal auch Polymer dispers verteilt enthält. Die Komplextröpfchen haben eine deutlich höhere Dichte als die Polymerlösung und bei ausreichender Tröpfchengröße bildet sich zügig eine kohärente Komplexphase als untere Schicht in Abscheidern oder Sammelbehältern. Die Behälter werden von der Form und Ausstattung vorzugsweise der Problemstellung angepaßt, d.h. mit einer Trennschichtmessung und einer Zitze oder Verengung im unteren Teil versehen, die in Relation zur abgeschiedenen Komplexmenge pro Zeit steht. Wegen der Gefahr von Nebenreaktionen ist ein Volumen für die kohärente Komplexphase bevorzugt, das dem Komplexverbrauch der Polymerisation von maximal 1 bis 3 Stunden entspricht.

Ein mehr oder minder großer Teil der Komplextröpfchen ist jedoch so klein, daß die Abscheidung durch längere Verweilzeiten der oberen, polymerreichen und komplexarmen Phase oder andere technische Einrichtungen verbessert werden kann. Unterschiedliche Verweilzeiten für obere und untere Phase werden über die Lage der Trennschicht gesteuert, die Verweilzeit selbst über Größe des Behälters, Zulaufmengen und Lage eines eventuellen Flüssigkeitsstandes. Typische Einrichtungen zur Vergrößerung der Komplextröpfchen und damit einer verbesserten Abscheidung ist ein sogenannter Koaleszer, d.h. eine Filtereinrichtung, die über Porendurchmesser und/oder hydrophiles Filtermaterial die kleinen, hydrophilen Komplextröpfchen in größere Komplextröpfchen umwandelt. Als hydrophiles Filtermaterial werden häufig Glasfaser, Phenolharze oder Phenolharzbeschichtungen verwendet, aber auch Acrylnitrilfasern oder Beschichtungen sind an dieser Stelle geeignet. Sie haben hier jedoch eine andere Funktion bzw. Wirkung als bei der nachfolgend beschriebenen Adsorption. Häufig wird diese Koaleszierung durch einen Separator, in diesem Falle eine Hydrophobfiltration, unterstützt. Ein hydrophobes Filtermaterial, gegebenenfalls in Kombination mit engem Porendurchmesser, verhindert den Durchtritt feindisperser Katalysatortröpfchen.

Nach einer solchen Behandlung ist die obere, polymerreiche Phase im allgemeinen homogen und enthält nur noch lösliche Komplexanteile. Bei längerer Verweilzeit nach dieser Behandlung kann es allerdings durch Nachreaktion wieder zu Trübungen, d.h. Bildung einer dispersen Komplexphase kommen. Im allgemeinen schließt sich aber unmittelbar an die Komplexabtrennung eine Extraktion an, durch die löslicher Komplex entfernt wird. In einer besonders bevorzugten Ausführungsform erfolgt jedoch Adsorption des gelösten Komplexes an nitrilhaltigen Materialien z.B. gemäß EP 791 557 oder an nitrilmodifiziertem Kieselgel. Die Verwendung der nitrilhaltigen Polymeren in Faserform, z. B. Polyacrylnitrilfasern, ist bevorzugt, da durch ein entsprechendes Spinnverfahren eine hohe Oberfläche erzielt werden kann.

Aus den beladenen nitrilhaltigen Materialien wird der Komplex-Katalysator durch thermische Behandlung freigesetzt und in die Polymerisation zurückgeführt.

Alternativ zur Anreicherung bzw. Abtrennung der Komplextröpfchen mittels der vorgenannten Filtervorrichtungen kann die Koaleszierung der dispersen Komplextröpfchen und somit der deren Anreichung in kohärenter Phase und Abtrennung mittels elektrostatischer Koalezsierappaarate wie sie z.B. in Chem. Ing. Techn. 62, 525 (1990) beschrieben sind, erfolgen. Ein solches Verfahren wurde in der malaysischen Patentanmeldung PI 9704367 für die Abtrennung von ionischen Kobaltsalzen aus Hydroformylierungsgemischen des Polyisobutens beschrieben. Es war überraschend, daß diese Abscheidung auch bei den im erfindungsgemäßen Verfahren verwendeten Bortrifluorid-Komplexen gelingt, da diese elektrisch neutral sind.

Die Ausbildung einer den Katalysatorkomplex enthaltenden kohärenten Phase ist allerdings für eine Rückführung nicht zwingend. Auch eine Phase in der der Komplex noch dispers verteilt ist, kann gegebenenfalls zusätzlich zum Reaktor zurückgeführt werden. In diesem Fall verzichtet man darauf, den Abscheider mit einer Trennschicht zu betreiben und nimmt eine partielle Polymerrückführung zum Reaktor in Kauf.

Der angereicherte und/oder abgetrennte Katalysatorkomplex wird dann gemäß Stufe (c), in der Regel ohne weitere Reinigung, in die Polymerisation, bei einer mehrstufigen Polymerisation, im allgemeinen in die erste Stufe zurückgeführt. Im allgemeinen ist es möglich, 70 bis 90 % des Katalysatorkomplexes zurückzuführen.

Auch bei fast vollständiger Rückführung des Katalysatorkomplexes tritt ein gewisser Aktivitätsverlust auf, der durch Zusatz von geringen Mengen $BF_3$-Katalysator, z.B. 1 bis 30, vorzugsweise 3 bis 20 und insbesondere 5 bis 10 Gew.-%, bezogen auf im geraden Durchgang benötigten Anteil $BF_3$-Komplex und Bortrifluorid ausgeglichen wird. Der Anteil an Komplexbildner hängt von den Komplexverlusten ab und kann dabei gegebenenfalls weniger als stöchiometrisch sein und sogar auf Null zurückgehen, falls das Kohlenwasserstoff-Einsatzmaterial z.B. Komplexbildner wie Methanol enthält, die vom vorgeschalteten Molekularsieb nicht abgefangen werden.

Es war überraschend, daß die Rückführung des ganzen Komplexes einschließlich der weniger bevorzugten Komplexbildner Wasser oder Methanol und nicht nur die Rückführung des aus dem Komplex abgespaltenen Bortrifluorids möglich ist, ohne daß sich die Eigenschaften des damit hergestellten Polyisobutens nachteilig verändern.

Beispiel 1

Der Reaktor W1 gemäß Fig. 1 besteht aus einem Teflonschlauch von 7,6 m Länge mit einem Innendurchmesser von 4 mm, über den durch eine Zahnradpumpe P1 50 l/h Reaktorinhalt im Kreis geführt werden. Rohr und Pumpe haben einen Inhalt von 100 ml. Teflonschlauch und Pumpenkopf befinden sich in einem Kältebad von -19°C (Kryostat). Als Feed wird Isobuten (Leitung 1) und n-Hexan (Leitung 2) verwendet, der Zulauf beträgt 140 g/h Isobuten und 160 g/h Hexan. Er wird über einem Molekularsieb 3 Å auf unter 3 ppm Wasser getrocknet (K1) und durch eine Kapillare mit 2 mm Innendurchmesser auf -19°C vorgekühlt dem Umlaufreaktor zugeführt. $BF_3$ (Leitung 3) und Isopropanol als Komplexbildner (Leitung 4) werden direkt in den Umlaufreaktor eingespeist. Die $BF_3$- und Isopropanolmengen werden so lange variiert, bis ein Isobutenumsatz von 90 % und ein Molgewicht $M_N$ von 1000 entsteht. Die $BF_3$-Zugabemenge beträgt im stationären Zustand 10 mmol/h, die Isopropanolzugabemenge 13,5 mmol bei einer Reaktortemperatur von -13°C.

Die Bestimmung des Isobutenumsatzes erfolgt gaschromatographisch, n-Hexan dient als Referenz. Durch die Zuläufe, das Reaktorvolumen und die Volumenkontraktion durch Polymerisation ergibt sich eine mittlere Verweilzeit von 13 Minuten. Unmittelbar hinter der Druckhaltung wird mit 15 ml/h Acetonitril (Leitung 5) abgebrochen.

Die Druckverhältnisse im Reaktor werden von seiner Geometrie, der Umlaufmenge, der Viskosität des Reaktionsgemisches und der Druckhaltung bestimmt. Die Druckhaltung unmittelbar am Reaktoraustritt auf der Druckseite der Pumpe ist auf 7 bar eingestellt, bei den vorliegenden Konzentrationsverhältnissen wird auf die Saugseite der Pumpe P1 etwa 4 bar gemessen. Der Druckverlust des Systems beträgt damit 3 bar. Der Reaktoraustrag wird nach Reaktionsabbruch durch Acetonitril (Strom 5) mit 600 ml/h heißem Wasser (60°C) (Leitung 6) in einem 1-1-Rührkolben R1 ausgerührt. Eine Probe des Reaktorinhalts (Probennahme bei C, Weg A gestellt) wird mit ethanolischer KOH gegen Phenolphthalein in wäßriger Phase titriert, bis die Rosafärbung 10 Minuten stehenbleibt. Man ermittelt so eine Säurezahl von 2,6.

Zur Einstellung eines stationären Gleichgewichts im Polymerisationsreaktor wird der Rührkolben nach 2 Stunden entleert und eine einstündige Probe gesammelt, die wäßrige Phase der einstündigen Probe abgetrennt und die organische Phase destillativ aufgearbeitet. Es wird bis 2 $mbar_{abs}$ bei 230°C ausdestilliert, der Oligomeranteil des Destillats gaschromatographisch bestimmt und das Sumpfprodukt charakterisiert. Der Anteil an endständigen Doppelbindungen (Vinylidengehalt) wurde nach bekannten Methoden mittels $^{13}C$-NMR mit 88 % bestimmt. Die Viskosität bei 100°C, gemessen in einem Ubbelohde-Viskosimeter betrug 203 $mm^2/s$, das Molekulargewicht mittels GPC wurde mit $M_N$ 1005 und einer Verteilung D von 1,5 bestimmt. Die Bromzahl beträgt 16,0 und die Polymerausbeute 97 %.

Unter den zuvor beschriebenen Bedingungen wird jetzt hinter der Druckhaltung ein Nachreaktor gemäß WO 96/40808 in Form einer Edelstahlkapillare mit 2 mm Innendurchmesser und 5 m Länge (W2) sowie ein gefluteter 400 ml Edelstahlbehälter B1 mit Zulauf über dem Behälterboden durch eingestecktes Rohr und oberem und unterem Auslaß in Betrieb genommen. Dazu wird der Weg über Leitung A geschlossen und der Weg über Leitung B gestellt. Beide Einrichtungen befinden sich im gleichen Kältebad wie der Hauptreaktor. Im oberen Abgang des Behälters B1 befindet sich ein Teflonfilter mit 0,2 µm Porenweite, der untere Abgang geht auf eine Pumpe, die in den Hauptreaktor zurückfördern kann. Die Druckhaltung am Ausgang des Hauptreaktors wird um 1 bar reduziert, der Abbruch mit Acetonitril unterbleibt. Jetzt füllt sich der Behälter B1. Die Reaktion im Behälter B1 schreitet fort und es kommt zu einer Erwärmung von 4°C, wobei der Isobutenumsatz auf 99,4 % steigt. Nach ca. 45 Minuten ist der Behälter B1 gefüllt und es wird im Rührkolben R1 eine Probe gesammelt und wie vorher beschrieben aufgearbeitet.

Man erhält eine Polymerausbeute von 95 %, eine Bromzahl von 16, ein $M_N$ von 998, eine Verteilung von 1,5 und eine Reaktivität von 87 %, d.h. keine oder nur geringfügige Änderungen gegenüber der ursprünglichen Fahrweise. Der Zulauf zum Rührkolben, Probennahme bei C, hat jedoch nur noch eine Säurezahl von 0,2. Dies entspricht einer 92 %igen Abscheidung des Komplexes, der im Behälter B1 bleibt. Er enthält ca. 20 % Wasser und wird abgelassen.

Jetzt wird die Komplexrückführungspumpe P2 mit 2,5 ml/h in Betrieb genommen, wobei zwangsläufig auch ein geringer Teil der organischen Phase zurückgeführt wird, da die Menge deutlich größer ist als die abgeschiedene Komplexmenge. Gleichzeitig wird die $BF_3$-Dosierung auf 1 mmol/h, Isopropanol auf 0,4 mmol/h reduziert. Die erhöhte $BF_3$-Menge wird benötigt, um die Reaktion in Gang zu halten, so daß die Isobutenumsätze in Haupt-, Nachreaktor und

Behälter B1 unverändert bleiben. Die Produktdaten bleiben unverändert, die Polymerausbeute fällt auf 94 %.

Beispiel 2

Die Versuchsführung erfolgt wie in Beispiel 1, jedoch wird der Nachreaktor W2 durch einen Entspannungsgefäß mit 200 ml Volumen ersetzt, der bei 20 $mbar_{abs}$ betrieben wird. Die Brüden werden mit einem Trockeneiskühler kondensiert und mit einer Pumpe in den Hauptreaktor zurückgeführt, der Zulauf von frischem Hexan um 20 ml reduziert. Der Sumpf des Flashbehälters wird in den Behälter B1 gefördert, wo eine Komplexabscheidung in der vorbeschriebenen Form erfolgt. Das erhaltene Rohprodukt hat eine Säurezahl von 0,1, die Polymerausbeute steigt wieder auf 96 %, die Polymereigenschaften sind nahezu unverändert gegenüber der Verfahrensweise ohne Nachreaktor W2 des Beispiels 1.

Beispiel 3

Man verfährt wie in Beispiel 1 beschrieben, verwendet jedoch Methanol/Wasser als Komplexbildner. Es wird eine Mischung aus je 5 mmol in den Reaktor eingespeist, um vergleichbare Umsätze in Haupt- und Nachreaktor W2 einzustellen. Im stationären Zustand erhält man einen Isobutenumsatz von 90 %, wenn der Weg A gestellt ist. Nach dem Filter Ausgang B1 über Weg B ist die Säurezahl nur noch <0,1, d.h. es entsteht eine Abscheidungsrate von mehr als 95 %. Nach Wäsche und Destillation erhält man ein Polymer mit 83 % Vinylidendoppelbindungsanteil und einer Polymerausbeute von 94 %, ein $M_N$ von 1010, eine Verteilung von 1,6 und eine Viskosität von 218 $mm_2/s$.

Dann wird die Komplexrückführung wie in Beispiel 1 angegeben in Betrieb genommen. Nach einer Minute werden Wasser und Methanolzuläufe abgestellt und ca. 1 mmol $BF_3$ zur Aufrechterhaltung des Isobutenumsatzes von 90 % weiterhin dosiert. Auch nach weiteren 16 h Betriebszeit bleiben die Eigenschaften des Produkts unverändert.

## Patentansprüche

1. Verfahren zur Herstellung von niedermolekularem, hochreaktivem Polyisobutylen eines mittleren Molekulargewichts $M_n$ von 500 bis 5000 Dalton und einem Gehalt von endständigen Doppelbindungen von über 80 mol-% durch Polymerisation von Isobuten oder isobutenhaltigen Kohlenwasserstoffströmen in der flüssigen Phase und mit Hilfe eines Bortrifluorid-Komplex-Katalysators bei Temperaturen von -40 bis +20°C und bei einem Druck von 1 bis 20 bar, **dadurch gekennzeichnet, daß** man

    a) die Polymerisation bis zu einem Restgehalt des Reaktionsgemisches von weniger als 2 Gew.-% Isobuten, bezogen auf die Gesamtmenge der eingespeisten Ströme, durchführt oder gegen Ende der Polymerisation restliches Isobuten soweit entfernt, daß der Restgehalt weniger als 2 Gew.-% beträgt,

    b) den dabei in Form von Tröpfchen anfallenden Bortrifluorid-Komplex-Katalysator in disperser und/oder kohärenter Phase anreichert,

    c) die komplexreichen Phasen in die Polymerisation zurückführt und

    d) die Katalysatorverluste durch Zusatz von Bortrifluorid und gegebenenfalls von Komplexbildnern ausgleicht.

2. Verfahren gemäß Anspruch 1, **dadurch gekennzeichnet, daß** man die Polymerisation überwiegend in homogener Phase durchführt.

3. Verfahren gemäß Anspruch 1, **dadurch gekennzeichnet, daß** der Restgehalt an Isobuten weniger als 1 Gew.-% beträgt.

4. Verfahren gemäß Anspruch 1, **dadurch gekennzeichnet, daß** man durch die Verwendung eines schwerlöslichen Bortrifluorid-Komplexes eine verstärkte Abscheidung bewirkt.

5. Verfahren gemäß Anspruch 1, **dadurch gekennzeichnet, daß** man durch Abkühlen des Reaktionsgemisches eine verstärkte Abscheidung des Bortrifluorid-Komplexes bewirkt.

6. Verfahren gemäß Anspruch 1, **dadurch gekennzeichnet, daß** man 70 bis 90 % der im Polymerisationsaustrag enthaltenen Menge des Katalysatorkomplexes zurückführt.

**7.** Verfahren gemäß Anspruch 1, **dadurch gekennzeichnet, daß** man als Katalysator einen Bortrifluorid-Komplex oder Komplex-Gemisch mit Wasser, Methanol, Ethanol, n- und iso-Propanol oder tert.-Butanol sowie deren tert-Butylether als Komplexbildner verwendet.

**8.** Verfahren gemäß Anspruch 1, **dadurch gekennzeichnet, daß** man den Restgehalt an Isobuten durch eine Flash-Verdampfung bei vermindertem Druck einstellt.

**9.** Verfahren gemäß Anspruch 1 und 3, **dadurch gekennzeichnet, daß** man die Polymerisation mehrstufig bis zu einem Restgehalt von Isobuten von weniger als 1 Gew.-% durchführt.

**10.** Verfahren gemäß Anspruch 1, **dadurch gekennzeichnet, daß** man die Polymerisation zweiphasig in Form einer Emulsionspolymerisation durchführt.

**11.** Verfahren gemäß Anspruch 1, **dadurch gekennzeichnet, daß** man nach Abtrennung des abgeschiedenen Komplex-Katalysators die noch verbleibenden nicht abgeschiedenen Anteile Komplex-Katalysator an nitrilhaltigen Fasern oder nitrilmodifiziertem Trägermaterial abscheidet, daraus durch thermische Behandlung den Katalysator freisetzt und in die Polymerisation zurückführt.

**12.** Verfahren gemäß Anspruch 1, **dadurch gekennzeichnet, daß** man zur Abscheidung des dispers im Polymerisationsgemisch verteilten Bortrifluorid-Komplex-Katalysators, einen elektrostatischen Koaleszierapparat verwendet.

**Claims**

**1.** A process for preparing low molecular weight, highly reactive polyisobutylene having an average molecular weight $M_n$ of from 500 to 5000 Dalton and a terminal double bond content of more than 80 mol% by polymerization in the liquid phase of isobutene or hydrocarbon streams comprising isobutene with the aid of a boron trifluoride complex catalyst at from -40 to +20°C and at from 1 to 20 bar, which comprises

a) polymerizing until the residual isobutene content of the reaction mixture is less than 2% by weight, based on the total amount of streams introduced, or removing residual isobutene towards the end of the polymerization until the residual isobutene content is less than 2% by weight,

b) enriching the boron trifluoride complex catalyst which is obtained here in the form of droplets in the disperse and/or coherent phase,

c) recycling the complex-enriched phases to the polymerization and

d) compensating for catalyst losses by adding boron trifluoride and, if necessary, complexing agents.

**2.** A process as claimed in claim 1, wherein the polymerization is carried out mainly in the homogeneous phase.

**3.** A process as claimed in claim 1, wherein the residual isobutene content is less than 1% by weight.

**4.** A process as claimed in claim 1, wherein a sparingly soluble boron trifluoride complex is used to increase separation.

**5.** A process as claimed in claim 1, wherein the reaction mixture is cooled down to increase separation of the boron trifluoride complex.

**6.** A process as claimed in claim 1, wherein from 70 to 90% of the amount of catalyst complex in the polymerization effluent is recycled.

**7.** A process as claimed in claim 1, wherein the catalyst used is a boron trifluoride complex or complex mixture with water, methanol, ethanol, n- and isopropanol or tert-butanol and the tert-butyl ethers thereof as complexing agents.

**8.** A process as claimed in claim 1, wherein the residual isobutene content is controlled by flash evaporation under reduced pressure.

**9.** A process as claimed in either of claims 1 and 3, wherein the polymerization is conducted in multiple stages until the residual isobutene content is less than 1% by weight.

**10.** A process as claimed in claim 1, wherein the polymerization is carried out in two phases in the form of an emulsion polmerization.

**11.** A process as claimed in claim 1, wherein the unseparated portions of complex catalyst remaining after removal of the separated complex catalyst are deposited on nitrile-containing fibers or nitrile-modified support material, the catalyst is liberated from said fibers or support material by thermal treatment and is recycled to the polymerization.

**12.** A process as claimed in claim 1, wherein the boron trifluoride complex catalyst distributed in the polymerization mixture in disperse form is separated by means of an electrostatic coalescer.

## Revendications

**1.** Procédé de préparation de polyisobutylène très réactif à faible masse moléculaire, ayant une masse moléculaire moyenne $M_n$ de 500 à 5000 daltons et contenant plus de 80 % en moles de doubles liaisons terminales, par polymérisation d'isobutène ou de courants d'hydrocarbures contenant de l'isobutène, en phase liquide et à l'aide d'un catalyseur à base d'un complexe de trifluorure de bore, à des températures de -40 à +20°C et sous une pression de 1 à 20 bar, **caractérisé en ce que**

a) on met en oeuvre la polymérisation jusqu'à une teneur résiduelle en le mélange réactionnel inférieure à 2 % en poids d'isobutène par rapport à la quantité totale des courants injectés, ou encore, vers la fin de la polymérisation, on élimine l'isobutène résiduel, au point que sa teneur résiduelle soit inférieure à 2 % en poids,

b) on enrichit, en phase dispersée et/ou cohérente, le catalyseur à base d'un complexe de trifluorure de bore, que l'on obtient sous forme de gouttelettes,

c) on renvoie les phases riches en complexe à la polymérisation, et

d) on compense les pertes de catalyseur par addition de trifluorure de bore et éventuellement de complexants.

**2.** Procédé selon la revendication 1, **caractérisé en ce qu'**on met en oeuvre la polymérisation essentiellement en phase homogène.

**3.** Procédé selon la revendication 1, **caractérisé en ce que** la teneur résiduelle en isobutène est inférieure à 1 % en poids.

**4.** Procédé selon la revendication 1, **caractérisé en ce qu'**on réalise un dépôt renforcé grâce à l'utilisation d'un complexe de trifluorure de bore difficilement soluble.

**5.** Procédé selon la revendication 1, **caractérisé en ce qu'**on assure un dépôt renforcé du complexe de trifluorure de bore par refroidissement du mélange réactionnel.

**6.** Procédé selon la revendication 1, **caractérisé en ce qu'**on renvoie jusqu'à 70 à 90 % de la quantité du complexe catalyseur contenue dans le produit de polymérisation.

**7.** Procédé selon la revendication 1, **caractérisé en ce qu'**on utilise en tant que catalyseur un complexe de fluorure de bore ou un mélange complexe avec, en tant que complexant, de l'eau, du méthanol, de l'éthanol, du n- et de l'isopropanol ou du tert-butanol et leurs éthers tert-butyliques.

**8.** Procédé selon la revendication 1, **caractérisé en ce qu'**on ajuste la teneur résiduelle en isobutène par évaporation éclair sous pression réduite.

**9.** Procédé selon les revendications 1 et 3, **caractérisé en ce qu'**on met en oeuvre la polymérisation en plusieurs étapes jusqu'à une teneur résiduelle en isobutène inférieure à 1 % en poids.

**10.** Procédé selon la revendication 1, **caractérisé en ce qu'**on met en oeuvre la polymérisation dans des conditions diphasiques sous forme d'une polymérisation en émulsion.

**11.** Procédé selon la revendication 1, **caractérisé en ce que**, après séparation du catalyseur complexe qui se dépose, on dépose les fractions encore restantes et non-déposées du catalyseur complexe sur des fibres contenant des groupes nitrile ou un matériau support modifié par des groupes nitrile, on les débarrasse du catalyseur par traitement thermique et on les renvoie à la polymérisation.

**12.** Procédé selon la revendication 1, **caractérisé en ce qu'**on utilise pour déposer le catalyseur à base d'un complexe de trifluorure de bore, réparti d'une manière dispersée dans le mélange de polymérisation, un appareil de coalescence électrostatique.

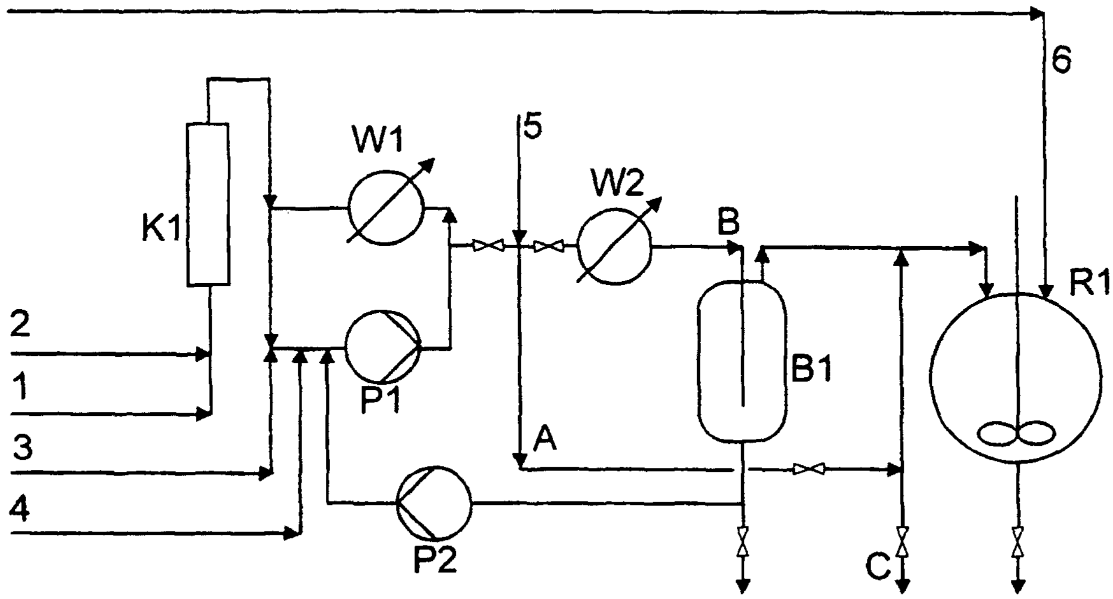


Fig. 1